# EUROPEAN PATENT APPLICATION

(11) **EP 2 827 617 A1**
(43) Date of publication of application: **21.01.2015**
(21) Application number: 13760820.4
(22) Date of filing: 22.02.2013
(51) Int. Cl.: H04W 4/02, G06F 17/30

(54) **SEARCH METHOD, CLIENT, SERVER AND SEARCH SYSTEM FOR MOBILE AUGMENTED REALITY**

(30) Priority: 15.03.2012 CN 201210069029
(71) Applicant: ZTE Corporation, Shenzhen, Guangdong 518057 (CN)
(72) Inventor: HUANG, Cheng, Shenzhen, Guangdong 518057 (CN)
(74) Representative: Quinterno, Giuseppe
(86) International application number: PCT/CN2013/071779
(87) International publication number: WO 2013/135132

(57) **Abstract**

A mobile augmented reality search method, client, server and search system are provided. The method includes: a mobile augmented reality server receiving an augmented reality target search request sent from a mobile augmented reality client; according to parameters related to search carried in the augmented reality target search request, the mobile augmented reality server identifying which augmented reality targets need to be recognized and returned; the mobile augmented reality server searching for an augmented reality target which has relationships with the augmented reality targets already searched back; and the mobile augmented reality server sending searched augmented reality target information to the mobile augmented reality client. The present invention solves the problem in the related art that the search result of a search merely for an object requested is incomplete and achieves a technical effect that more complete information is searched in an AR application, thus, the user is provided with more complete augmented reality information, and the experience of the user in the AR application is enhanced.

## Description

### Technical Field

The present invention relates to the field of communications and more particularly to a mobile augmented reality search method, client, server and search system.

### Background

With the mature and development of mobile terminals and mobile Internet technologies, Augmented Reality (AR), which was limited to be available only in laboratory, starts to come into the public view. A large number of Internet/mobile Internet AR applications, which are called mobile AR (MobAR) applications, based on image recognition and terminal positioning technologies spring up, and these applications draw great attention and have become a research hot spot in the industry.

The research and application of MobAR technologies applies virtual augmented reality information to the real world, changing the way the user observes the world around from the conventional WEB page browse query mode based on text input to a brand new mode in which a hotspot is captured based on the image captured by a camera and augmented information is browsed in real time.

A MobAR user can experience an augmented reality service while taking an image of the scene/objects around with a mobile terminal (e.g. a smart phone). There is a service scenario as follows: the augmented reality application (AR Application) running in a mobile terminal captures, based on the current location of the user, an AR Target, for example, a Point Of Interest (POI) related to a geographical location, deployed by an AR service provider and acquires AR content according to the selection of the user, the AR content including: word, picture, audio, video and the like. The acquired AR contents are finally fused with the camera view captured by the camera of the terminal in real time and then displayed on a screen in combination with the geographical fingerprint information (e.g. longitude and latitude and orientation) of the user terminal, thereby providing special AR service experience for the user.

Sometimes, when using an AR service, a MobAR user hopes to access related AR information in succession, for example, a user may desire to compare similar AR contents when shopping so as to make a final shopping decision, the AR content here mainly referring to a service description or product advertisement. However, in existing AR applications, a POI is merely searched according to the location of a user or the current camera view captured by a camera, that is, a POI can be searched and related AR content can be returned only when the POI falls into a search range preset by a user or is captured by a camera, otherwise, the user is unaware of the existence of the POI and consequentially cannot acquire related AR content.

This processing mode has the following disadvantages: first, the user is likely to miss some hotspots of interest without getting any prompt; second, as the search is carried out merely based on an AR Target, companied with no extension search, the AR information acquired by the user is incomplete, failing to meet the demands on an AR service.

No effective solutions have been proposed to address the problem above.

### Summary of the invention

The present invention provides a mobile augmented reality search method, client, server and search system to at least address the technical problem existing in the related art that the AR information acquired by a user from a search implemented based on an AR Target is incomplete.

In accordance with an aspect of the present invention, there is provided a MobAR search method including: a MobAR Server receiving an Augmented Reality (AR) target search request sent from a MobAR Client; the MobAR Server identifying which AR Targets need to be recognized and returned according to parameters related to search carried in the AR Target search request; the MobAR Server searching for an AR Target which has relationships with the AR Targets already searched back; and the MobAR Server sending searched AR Target information back to the MobAR Client.

Preferably, the MobAR Server searching for the AR Target which has relationships with the AR Targets already searched back includes: the MobAR Server determining AR Target relationships according to a first indicator carried in the parameters related to search; and the MobAR Server searching for the AR Target which has the AR Target relationships with the AR Targets already searched back.

Preferably, the AR Target relationships include at least one of the following relationships: Contains, Contained-within and Adjacent-to.

Preferably, the AR Target relationships include at least one of the following relationships: Parent, Child, Historical and Future.

Preferably, the MobAR Server searching for the AR Target which has relationships with the AR Targets already searched back includes: the MobAR Server determining whether or not the parameters related to search contain a second indicator for indicating to search for the AR Target which has relationships with the AR Targets already searched back; and the MobAR Server searching for the AR Target which has relationships with the AR Targets already searched back according to the second indicator if the parameters related to search contain the second indicator.

Preferably, after the MobAR Server searches for the AR Target which has relationships with the AR Targets already searched back, the method further includes: the MobAR Server determining whether or not the parameters related to search contain a third indicator for instructing to search for AR content corresponding to the AR Target which has relationships with the AR Targets already searched back; and the MobAR Server searching for the AR content corresponding to the AR Target which has relationships with the AR Targets already searched back according to the third indicator if the parameters related to search contain the third indicator.

In accordance with another aspect of the present invention, there is provided a mobile Augmented Reality (MobAR) search method including: a MobAR Server receiving an Augmented Reality (AR) content acquisition request sent from a MobAR Client; the MobAR Server searching for AR contents which need to be acquired and returned according to parameters carried in the AR content acquisition request; the MobAR Server searching for an AR Target which has relationships with AR Targets corresponding to the acquired AR contents; and the MobAR Server returning to the MobAR Client the acquired AR contents and information of the AR Target which has relationships with the AR Targets corresponding to the acquired AR contents.

Preferably, the MobAR Server searching for the AR Target which has relationships with the AR Targets corresponding to the acquired AR contents includes: the MobAR Server determining AR Target relationships according to a first indicator carried in the parameter; and the MobAR Server searching for an AR Target which has the AR Target relationships with the AR Targets corresponding to the acquired AR contents.

Preferably, the AR Target relationships include at least one of the following relationships: Parent, Child, Historical and Future.

Preferably, the MobAR Server searching for the AR Target which has relationships with the AR Targets corresponding to the acquired AR contents includes: the MobAR Server determining whether or not the parameters contain a second indicator for instructing to search for the AR Target which has relationships with the AR Targets corresponding to the acquired AR contents; and the MobAR Server searching for the AR Target which has relationships with the AR Targets corresponding to the acquired AR contents according to the second indicator if the parameters related to search contain the second indicator.

Preferably, after the MobAR Server searches for the AR Target which has relationships with the AR Targets corresponding to the acquired AR contents, the method further includes: the MobAR Server determining whether or not the parameters contain a third indicator for instructing to acquire AR content corresponding to the AR Target which has relationships with the AR Targets corresponding to the acquired AR contents; and the MobAR Server searching for the AR content corresponding to the AR Target which has relationships with the AR Targets corresponding to the acquired AR contents according to the third indicator if the parameters related to search contain the third indicator.

In accordance with still another aspect of the present invention, there is provided a mobile Augmented Reality (MobAR) search method including: a MobAR Client providing parameters related to search in an Augmented Reality (AR) target search request according to User Context and/or User Preference, wherein the parameters related to search are used to request a MobAR Server to search for AR Targets and an AR Target which has relationships with the AR Targets; and the MobAR Client sending the AR Target search request to the MobAR Server.

Preferably, the MobAR Client providing the parameters related to search in the AR Target search request according to the User Context and/or User Preference includes: the MobAR Client providing a first indicator in the parameters related to search, wherein the first indicator is used to indicate AR Target relationships and to request the MobAR Server to search for an AR Target which has the AR Target relationships with the AR Targets.

Preferably, the AR Target relationships include at least one of the following relationships: Contains, Contained-within, Adjacent-to, Parent, Child, Historical and Future.

Preferably, the MobAR Client providing the parameters related to search in the AR Target search request according to the User Context and/or User Preference includes: the MobAR Client providing a second indicator in the parameters related to search, wherein the second indicator is used to instruct to search for the AR Target which has relationships with the AR Targets.

Preferably, the MobAR Client providing the parameters related to search in the AR Target search request according to the User Context and/or User Preference includes: the MobAR Client providing a third indicator in the parameters related to search, wherein the third indicator is used to instruct the MobAR Server to search for AR content corresponding to the AR Target which has relationships with the AR Targets which need to be recognized and returned.

In accordance with still another aspect of the present invention, there is provided a mobile Augmented Reality (MobAR) search method including: a MobAR Client providing parameters in an Augmented Reality (AR) content acquisition request, wherein the parameters are used to request a MobAR Server to acquire AR contents and to search for an AR Target which has relationships with AR Targets corresponding to the acquired AR contents; and the MobAR Client sending the AR content acquisition request to the MobAR Server.

Preferably, the MobAR Client providing the parameters in the AR content acquisition request includes: the MobAR Client providing a first indicator in the parameter, wherein the first indicator is used to indicate AR Target relationships and to request the MobAR Server to search for the AR Target which has relationships with the AR Targets corresponding to the acquired AR contents.

Preferably, the AR Target relationships include at least one of the following relationships: Contains, Contained-within, Adjacent-to, Parent, Child, Historical and Future.

Preferably, the MobAR Client providing the parameters in the AR content acquisition request includes: the MobAR Client providing a second indicator in the parameter, wherein the second indicator is used to instruct to search for the AR Target which has relationships with the AR Targets corresponding to the acquired AR contents.

Preferably, the MobAR Client providing the parameters in the AR content acquisition request includes: the MobAR Client providing a third indicator in the parameter, wherein the third indicator is used to instruct the MobAR Server to acquire AR content corresponding to the AR Target which has relationships with the AR Targets corresponding to the acquired AR contents.

In accordance with still another aspect of the present invention, there is provided a mobile Augmented Reality (MobAR) search method including: a MobAR Client receiving an Augmented Reality (AR) target search response returned from a MobAR Server; the MobAR Client extracting information of AR Targets carried in the AR Target search response; and the MobAR Client displaying relationships among the AR Targets according to the information of the AR Targets.

Preferably, the MobAR Client displaying the relationships among the AR Targets includes: the MobAR Client displaying the relationships among all AR Targets within a search range; or the MobAR Client displaying the relationships corresponding to one AR Target.

Preferably, the relationships include at least one of the following relationships: Contains, Contained-within, Adjacent-to, Parent, Child, Historical and Future.

In accordance with still another aspect of the present invention, there is provided a mobile Augmented Reality (MobAR) server including: a receiving unit configured to receive an Augmented Reality (AR) target search request sent from a MobAR Client; a first search unit configured to identify, according to parameters related to search carried in the AR Target search request, which AR Targets need to be recognized and returned; a second search unit configured to search for an AR Target which has relationships with the AR Targets already searched back; and a returning unit configured to send searched AR Target information back to the MobAR Client.

In accordance with still another aspect of the present invention, there is provided a mobile Augmented Reality (MobAR) server including: a receiving unit configured to receive an Augmented Reality (AR) content acquisition request sent from a MobAR Client; a first search unit configured to search for, according to parameters carried in the AR content acquisition request, AR contents which need to be acquired and returned; a second search unit configured to search for an AR Target which has relationships with AR Targets corresponding to the acquired AR contents; and a returning unit configured to return to the MobAR Client the acquired AR contents and information of the AR Target which has relationships with the AR Targets corresponding to the acquired AR contents.

In accordance with still another aspect of the present invention, there is provided a mobile Augmented Reality (MobAR) client including: a provision unit configured to provide parameters related to search in an Augmented Reality (AR) target search request according to User Context and/or User Preference, wherein the parameters related to search are used to request a MobAR Server to search for AR Targets and an AR Target which has relationships with the AR Targets; and a sending unit configured to send the AR Target search request to the MobAR Server.

In accordance with still another aspect of the present invention, there is provided a mobile Augmented Reality (MobAR) client including: a provision unit configured to provide parameters in an Augmented Reality (AR) content acquisition request, wherein the parameters are used to request a MobAR Server to acquire AR contents and to search for an AR Target which has relationships with AR Targets corresponding to the acquired AR contents; and a sending unit configured to send the AR content acquisition request to the MobAR Server.

In accordance with still another aspect of the present invention, there is provided a mobile Augmented Reality (MobAR) client including: a receiving unit configured to receive an Augmented Reality (AR) target search response returned by a MobAR Server; an extraction unit configured to extract information of AR Targets carried in the AR Target search response; and a display unit configured to display relationships among the AR Targets according to the information of the AR Targets.

In accordance with still another aspect of the present invention, there is provided a mobile Augmented Reality (MobAR) search system including: the aforementioned MobAR Server and the aforementioned MobAR Client.

In the embodiments of the present invention, a MobAR Server searches for related AR Targets according to the indication information indicating to search for related AR Targets carried in an AR Target search request or an AR content acquisition request, thereby addressing the problem in the related art that the search result of a search merely for an object requested is incomplete and achieving a technical effect that more complete information is searched in an AR application, thus, the user is provided with more complete augmented reality information, and the experience of the user in the AR application is enhanced.

### Brief description of the drawings

The accompanying drawings incorporated in and forming part of the present invention are provided for a better understanding of the present invention, and the exemplary embodiments of the present invention and the description thereof are illustrative of the present invention but are not to be construed as limiting the present invention. In the accompanying drawings:
Fig. 1 is a flowchart showing a preferred flow of a MobAR search method according to an embodiment of the present invention;
Fig. 2 is a flowchart showing another preferred flow of a MobAR search method according to an embodiment of the present invention;
Fig. 3 is a flowchart showing still another preferred flow of a MobAR search method according to an embodiment of the present invention;
Fig. 4 is a block diagram showing a preferred structure of a MobAR search system according to an embodiment of the present invention;
Fig. 5 is a block diagram showing another preferred structure of a MobAR search device according to an embodiment of the present invention;
Fig. 6 is a flowchart showing another preferred flow of a MobAR search method according to an embodiment of the present invention;
Fig. 7 is a flowchart showing another preferred flow of a MobAR search method according to an embodiment of the present invention;
Fig. 8 is a block diagram showing still another preferred structure of a MobAR search device according to an embodiment of the present invention;
Fig. 9 is a schematic diagram showing the structure of a MobAR system architecture based on a relational point of interest according to an embodiment of the present invention;
Fig. 10 is a schematic diagram showing another structure of a MobAR system architecture based on a relational point of interest according to an embodiment of the present invention;
Fig. 11 is a schematic diagram showing still another structure of a MobAR system architecture based on a relational point of interest according to an embodiment of the present invention;
Fig. 12 is a flowchart showing a preferred flow of a search method of a MobAR Server upon a service request based on a relational point of interest according to an embodiment of the present invention;
Fig. 13 is a flowchart showing a preferred flow of a search method of a MobAR Server upon a service request based on a relational point of interest according to an embodiment of the present invention;
Fig. 14 is a flowchart showing another preferred flow of a search method of a MobAR Server upon a service request based on a relational point of interest according to an embodiment of the present invention;
Fig. 15 is a schematic diagram showing the interaction of a search method of a MobAR Server upon a service request based on a relational point of interest according to an embodiment of the present invention;
Fig. 16 is a schematic diagram showing another interaction of a search method of a MobAR Server upon a service request based on a relational point of interest according to an embodiment of the present invention;
Fig. 17 is a schematic diagram showing still another interaction of a search method of a MobAR Server upon a service request based on a relational point of interest according to an embodiment of the present invention.

### Detailed description of the embodiments

The present invention is described below in detail with reference to the accompanying drawings when read in conjunction with embodiments. It should be appreciated that the embodiments described herein and the features thereof can be combined with each other on condition that no conflict is caused.

### Embodiment 1

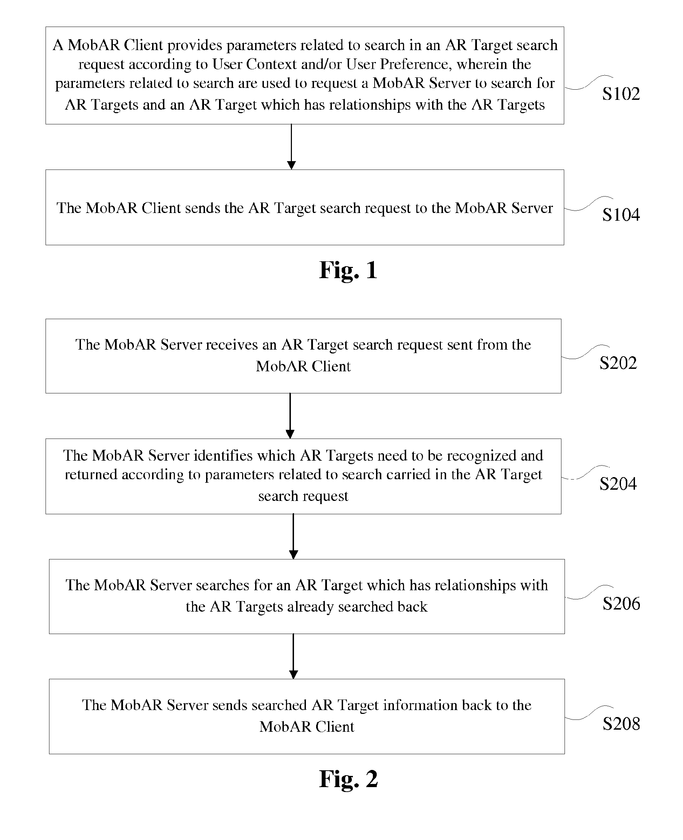

In this embodiment, there is provided a preferred MobAR search method which is mainly carried out based on an AR Target search request, and which, as shown in Fig. 1, includes the following specific steps.
S102: a MobAR Client provides parameters related to search in an AR Target search request according to User Context and/or User Preference, wherein the parameters related to search are used to request a MobAR Server to search for AR Targets and an AR Target which has relationships with the AR Targets.
S104: the MobAR Client sends the AR Target search request to the MobAR Server.

In the preferred embodiment, the MobAR Client provides indication information indicating to search for related AR Targets in a generated AR Target search request, thereby addressing the problem in the related art that the search result of a search merely for an object requested is incomplete and achieving a technical effect that more complete information is searched in an AR application, thus, the user is provided with more complete augmented reality information and the experience of the user in the AR application is enhanced.

The User Context, which refers to the state of a user, may include, but is not limited to be: the geographical location and/or the presence information of the user.

In a preferred embodiment, the MobAR Client may provide the parameters related to search in the AR Target search request according to User Context and/or User Preference in the following way: the MobAR Client provides a first indicator in the parameters related to search, wherein the first indicator is used to indicate AR Target relationships and to request the MobAR Server to search for an AR Target which has the AR Target relationships with the AR Targets. The AR Target relationships include, but is not limited to be: at least one of the following relationships: Contains, Contained-within, Adjacent-to, Parent, Child, Historical and Future. The first indicator may be the search parameter value of the 'related AR Target search relationship'.

The MobAR Client may provide other indication information in the parameters related to search according to User Context and/or User Preference, and in a preferred embodiment, the MobAR Client provides a second indicator in the parameters related to search, wherein the second indicator is used to instruct to search for AR Target which has relationships with the AR Targets. The second indicator may be a 'related AR Target search indicator'.

In a preferred embodiment, the step that a MobAR Client provides parameters related to search in an AR Target search request according to User Context and/or User Preference includes: the MobAR Client provides a third indicator in the parameters related to search, wherein the third indicator is used to instruct the MobAR Server to search for AR content corresponding to AR Target which has relationships with the AR Targets which need to be recognized and returned. The third indicator may an 'AR content caching indicator'.

After step S104 is executed, the MobAR Server searches for AR Targets based on the AR Target search request. In an embodiment of the present invention, there is provided a specific search method which, as shown in Fig. 2, includes:
S202: the MobAR Server receives an AR Target search request sent from the MobAR Client.
S204: the MobAR Server identifies which AR Targets need to be recognized and returned according to parameters related to search carried in the AR Target search request.
S206: the MobAR Server searches for an AR Target which has relationships with the AR Targets already searched back.
S208: the MobAR Server sends searched AR Target information back to the MobAR Client.

In the preferred embodiment, the MobAR Server searches for related AR Targets according to the indication information which is carried in the AR Target search request and is used to indicate to search for related AR Targets, thereby addressing the problem in the related art that the search result of a search merely for an object requested is incomplete and achieving a technical effect that more complete information is searched in an AR application, thus, the user is provided with more complete augmented reality information, and the experience of the user in the AR application is enhanced.

In a preferred embodiment, the MobAR Server may search for an AR Target which has relationships with the AR Targets already searched back in the following way: the MobAR Server determines AR Target relationships according to a first indicator carried in the parameters related to search; and the MobAR Server searches for the AR Target which has the AR Target relationships with the AR Targets already searched back. The AR Target relationships include, but is not limited to be: at least one of the following relationships: Contains, Contained-within, Adjacent-to, Parent, Child, Historical and Future.

In a preferred embodiment, the MobAR Server may search for an AR Target which has relationships with the AR Targets already searched back in the following way: the MobAR Server determines whether or not the parameters related to search contain a second indicator for instructing to search for the AR Target which has relationships with the AR Targets already searched back; and the MobAR Server searches for an AR Target which has relationships with the AR Targets already searched back according to the second indicator if the parameters related to search contain the second indicator. That is, if a second indicator (the second indicator may be a related AR Target search indicator) is carried in the parameters related to search, then the MobAR Server searches for an AR Target which has relationships with the AR Targets already searched back, otherwise, the MobAR Server conducts no search for related targets.

In a preferred embodiment, after the MobAR Server searches for an AR Target which has relationships with the AR Targets already searched back, the MobAR search method further includes: the MobAR Server determines whether or not the parameters related to search contain a third indicator for instructing to search for AR content corresponding to the AR Target which has relationships with the AR Targets already searched back; and the MobAR Server searches for the AR content corresponding to AR Target which has relationships with the AR Targets already searched back according to the third indicator if the parameters related to search contain the third indicator. That is, if a third indicator (the third indicator may be an AR content caching indicator) is carried in the parameters related to search, then the MobAR Server searches for the AR content corresponding to the AR Target which has relationships with the AR Targets already searched back, otherwise, the MobAR Server conducts no search for related contents.

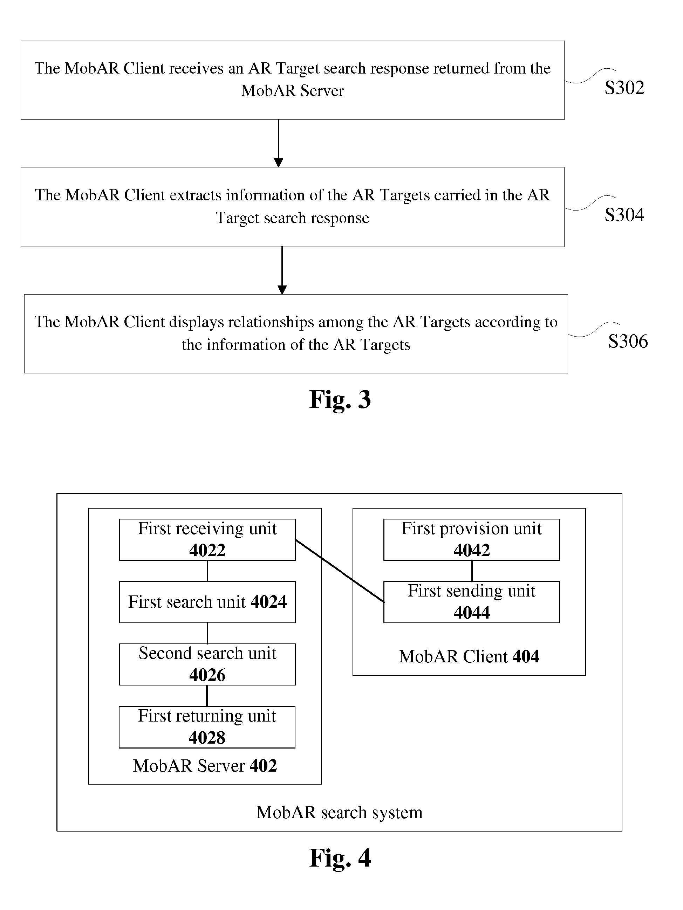

The searched information may need to be presented after step S208 is executed, and in an embodiment of the present invention, there is also provided an AR display method, which, as shown in Fig. 3, includes:
S302: the MobAR Client receives an AR Target search response returned from the MobAR Server.
S304: the MobAR Client extracts information of the AR Targets carried in the AR Target search response.
S306: the MobAR Client displays relationships among the AR Targets according to the information of the AR Targets.

In a preferred embodiment, the MobAR Client may display relationships among AR Targets in either of the following ways:
1) the MobAR Client displays relationships among all the AR Targets within a search range;
2) the MobAR Client displays the relationships corresponding to one AR Target.

The relationships include, but are not limited to be: at least one of the following relationships: Contains, Contained-within, Adjacent-to, Parent, Child, Historical and Future.

In an embodiment of the present invention, there is provided a preferred MobAR search system which, as shown in Fig. 4, includes a MobAR Server 402 and a MobAR Client 404.

The MobAR Server 402 includes: a receiving unit 4022 configured to receive an AR Target search request sent from the MobAR Client; a first search unit 4024 coupled with the first receiving unit 4022 and configured to identify, according to parameters related to search carried in the AR Target search request, which AR Targets need to be recognized and returned; a second search unit 4026 coupled with the first search unit 4024 and configured to search for an AR Target which has relationships with the AR Targets already searched back; and a first returning unit 4028 coupled with the second search unit 4026 and configured to send searched AR Target information back to the MobAR Client.

The MobAR Client 404 includes: a first provision unit 4042 configured to provide parameters related to search in the AR Target search request according to User Context and/or User Preference, wherein the parameters related to search are used to request the MobAR Server to search for AR Targets and an AR Target which has relationships with the AR Targets; and a first sending unit 4044 coupled with the first provision unit 4042 and configured to send the AR Target search request to the MobAR Server.

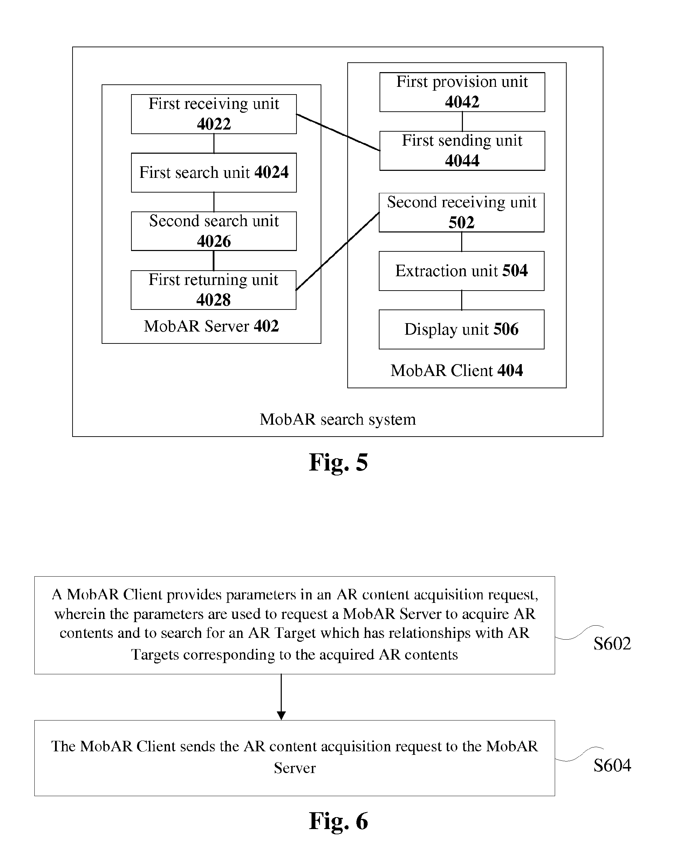

In a preferred embodiment, as shown in Fig. 5, the MobAR Client 404 may further include: a second receiving unit 502 configured to receive an AR Target search response returned by the MobAR Server; an extraction unit 504 coupled with the second receiving unit 502 and configured to extract information of the AR Targets carried in the AR Target search response; and a display unit 506 coupled with the extraction unit 504 and configured to display relationships among the AR Targets according to the information of the AR Targets.

Preferably, specific execution steps of an AR search method realized by the AR search systems shown in Fig. 4 and Fig. 5 can be understood with reference to those described in the aforementioned preferred embodiments and are not described here repeatedly.

### Embodiment 2

In an embodiment of the present invention, there is provided a preferred MobAR search method which is mainly carried out based on an AR content acquisition request, and which, as shown in Fig. 6, includes the following specific steps:
S602: a MobAR Client provides parameters in an AR content acquisition request, wherein the parameters are used to request a MobAR Server to acquire AR contents and to search for an AR Target which has relationships with AR Targets corresponding to the acquired AR contents.
S604: the MobAR Client sends the AR content acquisition request to the MobAR Server.

In the preferred embodiment, the MobAR Client provides indication information instructing to search for related AR Targets in the generated AR content acquisition request to realize a search for related AR Targets and content thereof, thereby addressing the problem in the related art that the search result of a search merely for an object requested is incomplete and achieving a technical effect that more complete information is searched in an AR application, thus, the user is provided with more complete augmented reality information, and the experience of the user in the AR application is enhanced.

In a preferred embodiment, the MobAR Client may provide parameters in the AR content acquisition request in the following way: the MobAR Client provides a first indicator in the parameter, wherein the first indicator is used to indicate AR Target relationships and to request the MobAR Server to search for an AR Target which has relationships with AR Targets corresponding to the acquired AR contents. The AR Target relationships include, but is not limited to be: at least one of the following relationships: Contains, Contained-within, Adjacent-to, Parent, Child, Historical and Future. The first indicator may be the parameter value of the 'related AR Target search relationship'.

The MobAR Client may provide other indication information in the parameter, and in a preferred embodiment, the MobAR Client provides a second indicator in the parameter, wherein the second indicator is used to instruct to search for an AR Target which has relationships with AR Targets corresponding to the acquired AR contents. Preferably, the second indicator is a 'related AR Target search indicator'.

In a preferred embodiment, the step that the MobAR Client provides parameters in an AR content acquisition request includes: the MobAR Client provides a third indicator in the parameter, wherein the third indicator is used to instruct the MobAR Server to acquire AR content corresponding to the AR Target which has relationships with the AR Targets corresponding to the acquired AR contents. Preferably, the third indicator is an 'AR content caching indicator'.

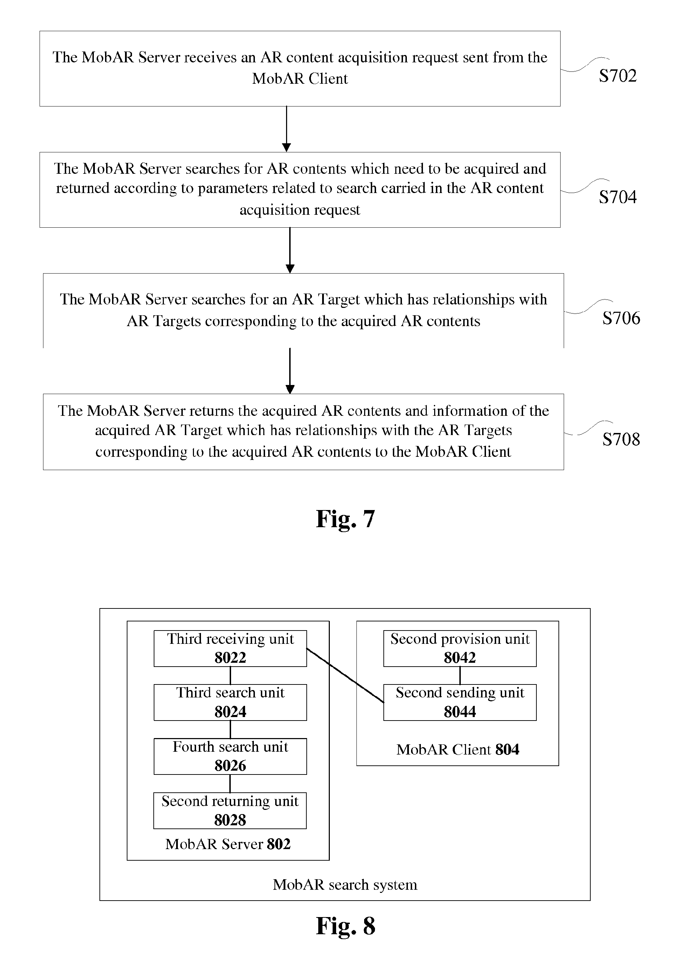

After step S604 is executed, the MobAR Server searches for AR Targets and contents based on the AR content acquisition request, and as shown in Fig. 7, the specific search process includes the following steps:
S702: the MobAR Server receives an AR content acquisition request sent from the MobAR Client.
S704: the MobAR Server searches for AR contents which need to be acquired and returned according to parameters carried in the AR content acquisition request.
S706: the MobAR Server searches for an AR Target which has relationships with AR Targets corresponding to the acquired AR contents.
S708: the MobAR Server returns to the MobAR Client the acquired AR contents and information of the acquired AR Target which has relationships with the AR Targets corresponding to the acquired AR contents.

In the aforementioned preferred embodiment, the MobAR Server searches for related AR Targets and content thereof according to the indication information which is carried in an AR content acquisition request and is used to indicate to search for related AR Targets, thereby addressing the problem in the related art that the search result of a search merely for an object requested is incomplete and achieving a technical effect that more complete information is searched in an AR application, thus, the user is provided with more complete augmented reality information, and the experience of the user in an AR application is improved.

In a preferred embodiment, the MobAR Server may search for AR Target which has relationships with the AR Targets corresponding to AR content in the following way: the MobAR Server determines AR Target relationships according to the first indicator in the parameter; and the MobAR Server searches for an AR Target which has the AR Target relationships with the AR Targets corresponding to the acquired AR contents. The AR Target relationships include, but is not limited to be: at least one of the following relationships: Contains, Contained-within, Adjacent-to, Parent, Child, Historical and Future.

In a preferred embodiment, the MobAR Server may search for AR Target which has relationships with the AR Targets corresponding to the AR content in the following way: the MobAR Server determines whether or not the parameters contain a second indicator for instructing to search for an AR Target which has relationships with AR Targets corresponding to the acquired AR contents; and the MobAR Server searches for AR Target which has relationships with the AR Targets corresponding to the acquired AR contents according to the second indicator if the parameters related to search contain the second indicator. That is, if a second indicator (the second indicator may be a related AR Target search indicator) is carried in the parameter, then the MobAR Server searches for AR Target which has relationships with the AR Targets corresponding to the acquired AR contents, otherwise, the MobAR Server conducts no search for related targets.

In a preferred embodiment, after the MobAR Server searches for an AR Target which has relationships with AR Targets corresponding to the AR content, the method further includes: the MobAR Server determines whether or not the parameters contain a third indicator for instructing to search for AR content corresponding to the AR Target which has relationships with the AR Targets corresponding to the acquired AR contents; and the MobAR Server searches for the AR content corresponding to the AR Target which has relationships with the AR Targets corresponding to the acquired AR contents according to the third indicator if the parameters contain the third indicator. That is, if a third indicator (the third indicator may be an AR content caching indicator) is carried in the parameter, then the MobAR Server searches for the AR content corresponding to the AR Target which has relationships with the AR Targets corresponding to the acquired AR contents, otherwise, the MobAR Server conducts no search for related contents.

In an embodiment of the present invention, there is further provided a preferred AR search system which, as shown in Fig. 8, includes: a MobAR Server 802 and a MobAR Client 804, wherein MobAR Server 802 includes: a third receiving unit 8022 configured to receive an AR content acquisition request sent from the MobAR Client; a third search unit 8024 coupled with the third receiving unit 8022 and configured to search for, according to parameters carried in the AR content acquisition request, AR contents which need to be acquired and returned; a fourth search unit 8026 coupled with the third search unit 8024 and configured to search for an AR Target which has relationships with AR Targets corresponding to the acquired AR contents; and a second returning unit 8028 coupled with the fourth search unit 8026 and configured to return to the MobAR Client the acquired AR contents and information of the AR Target which has relationships with the AR Targets corresponding to the acquired AR contents.

The MobAR Client 804 may include: a second provision unit 8042 configured to provide parameters in the AR content acquisition request, wherein the parameters are used to request the MobAR Server to acquire AR contents and to search for an AR Target which has relationships with AR Targets corresponding to the acquired AR contents; and a second sending unit 8044 coupled with the second provision unit 8042 and configured to send the AR content acquisition request to the MobAR Server.

Preferably, specific execution steps of an AR search method realized by the AR search system shown in Fig. 8 can be understood with reference to those described in the aforementioned preferred embodiments and are not described here repeatedly.

The AR search systems shown in Fig. 4 and Fig. 5 may coexist with the MobAR system shown in Fig. 8 or not, and no related limitation is given in the present invention.

### Embodiment 3

A preferred embodiment is provided to illustrate the present invention further, however, it should be noted that the preferred embodiment is merely for describing the present invention better and is not to be construed as limiting the present invention improperly.

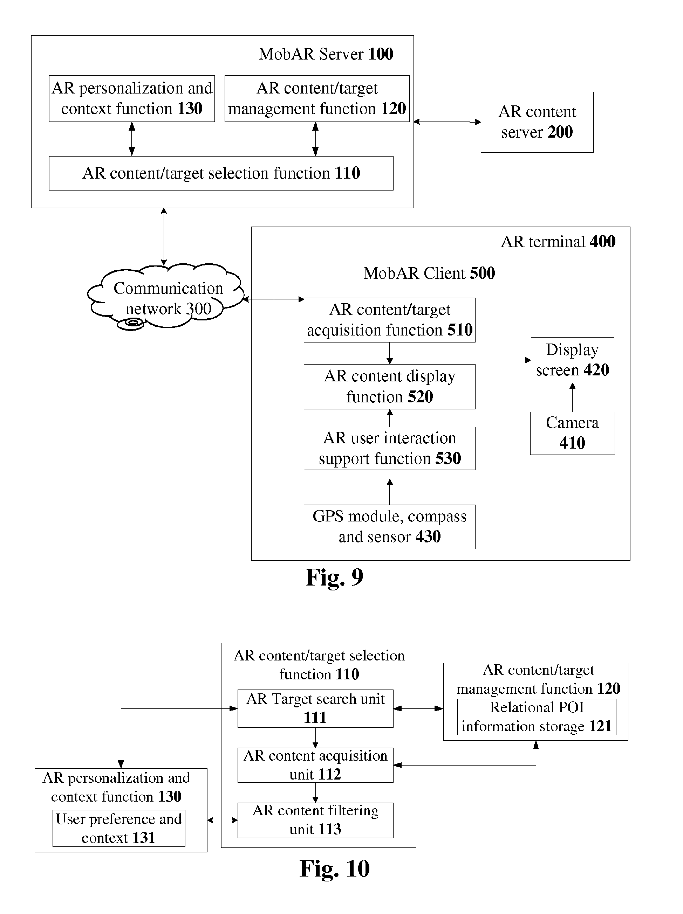

As shown in Fig. 9, a mobile augmented reality system architecture based on a relational point of interest (POI) provided by the embodiment of the present invention includes:
a MobAR Server 100, an AR content server 200, a communication network 300, a MobAR terminal 400 and a MobAR Client 500.

The MobAR Server 100 is a functional entity located at a MobAR system network side and is responsible for searching for AR Targets and selecting and acquiring AR content according to a request of the MobAR Client 500 and the AR personalization and context setting of a user. The MobAR Server 100, as shown in Fig. 10, mainly includes the following functional entities.

An AR content/target selection function 110 is configured to search for an AR Target and select and acquire AR content in the MobAR Server 100 according to a request of the MobAR Client 500 or a pushing request related to the forwarding of an AR Target and/or AR content.

An AR Target search unit 111 is configured to construct an AR Target search condition according to the parameters related to AR Target search carried in an AR Target search request and AR personalization and context, and send the AR Target search request to an AR content/target management function 120 to acquire an AR Target meeting the condition, wherein parameters related to the AR Target search may include, but is not limited to be: at least one of:
the position information, for example, the longitude and latitude, of an AR user;
the radius of an AR Target search range and a search type;
the type of an AR Target, for example: POI;
characteristics of an AR Target, for example, opening time and price range;
a related AR Target search indicator;
a related AR Target search relationship which includes: 'Contains', 'Contained-within' and 'Adjacent-to' and the like; and
an AR content caching indicator, for example, 'cache', 'not cache'.

The 'related AR Target search indicator' is used to instruct to perform a synchronous search for other AR Targets related to a matched AR Target. If the related AR Target search indicator is carried in the AR Target search request, then the AR content/target selection function 110 further searches for other related AR Targets according to the 'relationship' attribute, that is, the related AR Target search relationship, in the AR Target information returned matching with the search, otherwise, the AR content/target selection function 110 only return the matched AR Target obtained by searching.

The 'related AR Target search relationship' represents a search relationship standard based on which related AR Targets are searched. The 'related AR Target search relationship' represents a search for related AR Targets in accordance with the relationship 'Contains' or a search for related AR Targets in accordance with the relationship 'Contained-within' or a search for related AR Targets in accordance with the relationship 'Adjacent-to', and preferably represents by default a search for related AR Targets in accordance with all relationships.

The 'AR content caching indicator' represents a caching for corresponding AR contents, that is, if there is an AR content caching indicator in the AR Target search request, then AR contents of related AR Targets are acquired.

An AR content acquisition unit 112 is configured to construct an AR content acquisition condition according to an AR content acquisition parameter carried in an AR content acquisition request and AR personalization and context, and send the AR content acquisition request to the AR content/target management function 120 to acquire a set of AR content meeting the condition, wherein the AR content acquisition parameter may include, but is not limited to be: at least one of:
an AR content identifier or related AR Target identifiers;
characteristics of AR content, for example, medium type and price;
a related AR Target search indicator;
a related AR Target search relationship which includes: 'Contains', 'Contained-within' and 'Adjacent-to' and the like; and
an AR content caching indicator indicating the caching for AR content corresponding to the related AR Target.

An AR content/target management function 120 is configured to store and manage information related to the deployment of AR Targets and the release of AR contents, and the functions of the AR content/target management function 120 mainly includes:
the management on information of AR Targets based on a relational point of interest, the information at least including: AR Target identifiers, the type, the category and the description of AR Targets, corresponding AR content identifiers and related AR Target relationship information which at least includes: 'Contains', 'Contained-within' and 'Adjacent-to'; and
the management on corresponding AR content information which at least includes: an AR content identifier, AR Target identifiers, the release state of AR content, a rule for the deployment of AR content, an AR content access address and an access control strategy.

An AR personalization and context function 130 is configured to manage personal preference and User Context, wherein the personal preference includes, but is not limited to be: the preference on the search for AR Targets, for example, a search radius, a search type and characteristics of an AR Target; the preference on the acquisition of AR content, for example, characteristics of AR content; the preference on the search for related AR Targets, for example, whether or not to search for related AR Targets; and the preference on a related AR Target search relationship, for example, 'Contains', 'Contained-within' and 'Adjacent-to'.

The User Context includes, but is not limited to be at least one of: the state of a user, for example, the geographical location of the user and user presence information; and the state of an AR terminal, for example, the screen size, the residual power, the memory space and the medium playing capability of the AR terminal.

The AR content server 200, a functional entity deployed at a network side by an AR content provider, is configured to provide AR content corresponding to an AR Target, for example, a relational POI, issued in the MobAR Server, wherein the AR content includes: Word, image, audio, video and other multimedia information.

The communication network 300 is located between the MobAR Server 100 and the AR terminal 400 to provide a wired or wireless communication network of a network communication link.

The AR terminal 400 is a user-used mobile terminal with an AR service function and is configured to provide basic communication functions and an AR service experience for the user, preferably including:
a camera 410 configured to take a camera view of the physical surroundings of the user in real time; some cameras have a video memory for caching the camera view captured;
a display screen 420 configured to display, for the user, an AR view obtained by modifying and rendering the camera view captured by the camera 531 with AR content; and
a GPS module, a compass and a sensor etc. 430, wherein the GPS module communicates with a Global Positioning System (GPS) satellite to provide the position information (longitude and latitude) of a terminal in real time; the compass and the sensor are used to collect the state of a user terminal, which includes, but is not limited to be: the orientation of the camera and the inclination between the camera and the ground.

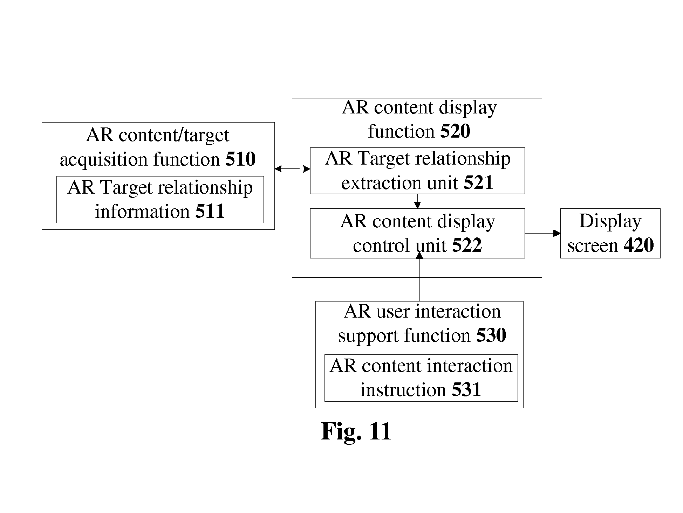

The MobAR Client 500 is a functional entity arranged at a terminal side in a MobAR service system and is responsible for sending an AR Target search request to the AR server 100, selecting and acquiring AR content and providing a MobAR service support capability for the AR application of an AR terminal. The MobAR Client 500, as shown in Fig. 11, may include the following functional modules.

An AR content/target acquisition function 510 is configured to receive a request from an AR application running in the AR terminal 300, and at the same time contact the MobAR Server 100 to request for a search for an AR Target and the acquisition of AR content. In the embodiment of the present invention, the AR content/target acquisition function 510 is responsible for forwarding the returned AR Target information containing related AR Targets to an AR content display function 520.

An AR content display function 520 is configured to control, according to the state of the AR terminal 300, the AR content/target acquisition function 510 to display on the display screen 420 the acquired AR contents fused with the camera view captured by the camera 410.

An AR Target relationship extraction unit 521 is configured to extract the relationship information among the related AR Targets contained in the AR Target information forwarded by the AR content/target acquisition function 510, the relationship information at least including: 'Contains', 'Contained-within' and 'Adjacent-to'.

An AR content display control unit 522 is configured to control, according to an AR content display indicator forwarded by a user interaction support function 530, the display of AR content containing the AR Target relationship information extracted by the AR Target relationship extraction unit 521, the display at least including:
the display of the global relationship of related AR Targets, that is, the display of the relationships among all the AR Targets returned from a search; and
the display of a single AR Target relationship and the display of the relationship related to a certain AR Target.

A user interaction support function 530 is configured to receive an interaction instruction input by a user and trigger service logic on the search for an AR Target and the acquisition and the display of AR content. In the embodiment of the present invention, the AR content display function 520 is instructed, according to an AR content display interaction instruction input by a user, to execute service logic related to the control on the display of AR content.

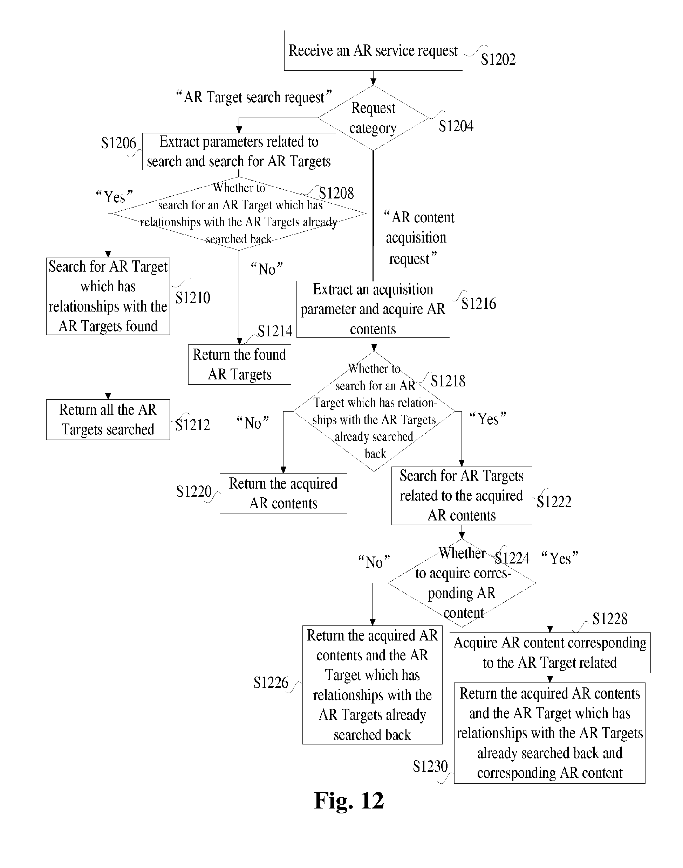

In an embodiment of the present invention, there is also provided a search method based on a service request from a MobAR Server based on a relational point of interest, which, as shown in Fig. 12, includes the following specific steps.
S1202: the MobAR Server receives an AR service request sent from a MobAR Client;
S1204: the MobAR Server determines the category of the AR service request, executes step S1206 if the AR service request is an 'AR Target search request' or step S1216 if the AR service request is an 'AR content acquisition request'.
S1206: the MobAR Server extracts parameters related to search and searches for matched AR Targets.
S1208: the MobAR Server determines whether or not to search for related AR Targets according to the search parameter value of the 'related AR Target search indicator' in the AR Target search request as well as AR personalization and AR context, determines that it is needed to search for related AR Targets if the 'related AR Target search indicator' is carried in the AR Target search request, or determines that it is not needed to search for related AR Targets and executes step S1214 if the 'related AR Target search indicator' is not carried in the AR Target search request.
S1210: the MobAR Server searches for AR Targets related to the searched matched AR Target according to the search parameter value in a 'related AR Target search relationship'.
S1212: the MobAR Server returns the found AR Target and related AR Targets and ends the flow.
S1214: the MobAR Server directly returns information of the found AR Target and ends the flow.
S1216: the MobAR Server extracts an acquisition parameter and acquires corresponding AR content according to the acquisition parameter.
S1218: the MobAR Server determines whether or not to search for related AR Targets according to the search parameter value of the 'related AR Target search indicator' in the AR content acquisition request as well as AR personalization and AR context, executes step S1220 if the 'related AR Target search indicator' is carried in the AR content acquisition request, or executes step S1222 if the 'related AR Target search indicator' is not carried in the AR content acquisition request.
S1220: the MobAR Server directly returns the acquired AR contents and ends the flow.
S1222: the MobAR Server searches for AR Targets related to the acquired AR contents according to the search parameter value of the 'related AR Target search relationship'.
S1224: the MobAR Server determines whether or not to acquire AR content corresponding to the related AR Target according to the search parameter value of an 'AR content caching indicator' as well as AR personalization and AR context, determines not to acquire AR content corresponding to related AR Target and executes step S1226 if the 'related AR Target search indicator' is carried in the AR content acquisition request, or executes step S1228 if the 'AR content caching indicator' is not carried in the AR content acquisition request.
S1226: the MobAR Server returns the acquired AR contents and the searched related AR Targets and ends the flow.
S1228: the MobAR Server acquires corresponding AR content according to the searched related AR Targets.
S1230: the MobAR Server returns the acquired AR contents and the searched related AR Targets and corresponding AR content.

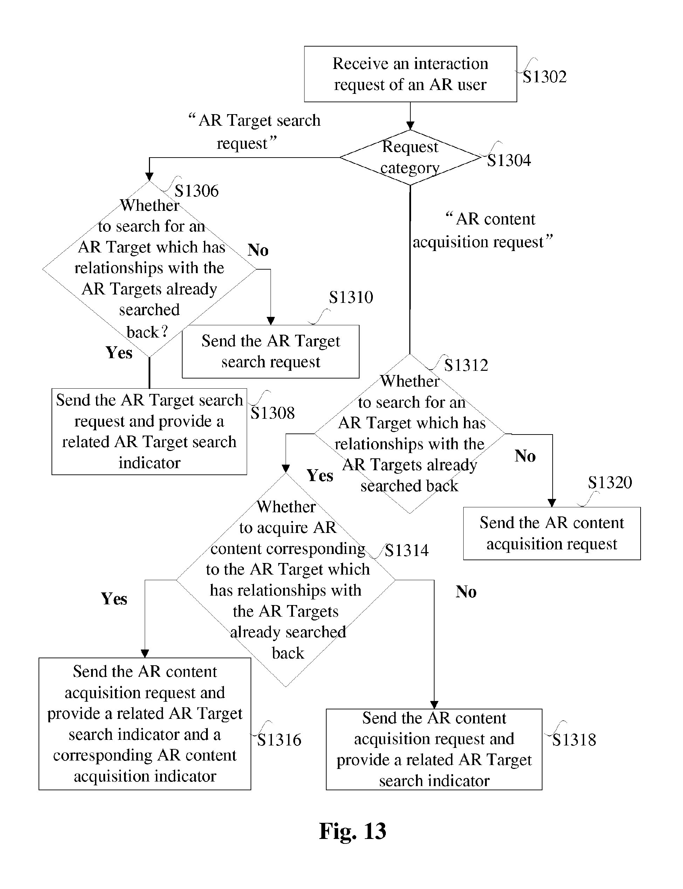

An embodiment of the present invention also discloses a method for a MobAR Client based on a relational point of interest to generate an AR service interaction request, which, as shown in Fig. 13, includes the following specific steps:
S1302: the MobAR Client receives an AR service interaction request of a user.
S1304: the MobAR Client determines the category of the AR service interaction request.
S1306: for an 'AR Target search request', the MobAR Client determines whether or not to search for related AR Targets according to specific interaction indication information which may be 'user requests to view the relationships among AR Targets' or the preference setting of the user, executes step S1308 after determining to search for related AR Targets, or executes step S1310 after determining not to search for related AR Targets.
S1308: the MobAR Client provides a 'related AR Target search indicator' in the AR service interaction request and sets the search parameter value of a 'related AR Target search relationship' to generate an AR Target search request, sends the AR Target request to a MobAR Server, and then ends the flow.
S1310: the MobAR Client provides no 'related AR Target search indicator' in the AR service interaction request, generates an AR Target search request, sends the AR Target search request to the MobAR Server, and then ends the flow.
S1312: for an 'AR content acquisition request', the MobAR Client determines whether or not to search for related AR Targets according to the preference setting of the user, executes step S1314 after determining to search for related AR Targets, or executes Step 1320 after determining not to search for related AR Targets.
S1314: the MobAR Client further determines whether or not to acquire AR content corresponding to the related AR Target synchronously, executes step S1316 after determines to acquire AR content corresponding to the related AR Target synchronously, or executes step S1318 after determines not to acquire AR content corresponding to the related AR Target synchronously.
S1316: the MobAR Client provides a 'related AR Target search indicator' and an 'AR content acquisition indicator' to generate an AR content acquisition request, and sends the AR content acquisition request to the MobAR Server, and then ends the flow.
S1318: the MobAR Client provides a 'related AR Target search indicator' to generate an AR content acquisition request, and sends the AR content acquisition request to the MobAR Server, and then ends the flow.
S1320: the MobAR Client provides no 'related AR Target search indicator', generates an AR content acquisition request, sends the AR content acquisition request to the MobAR Server, and then ends the flow.

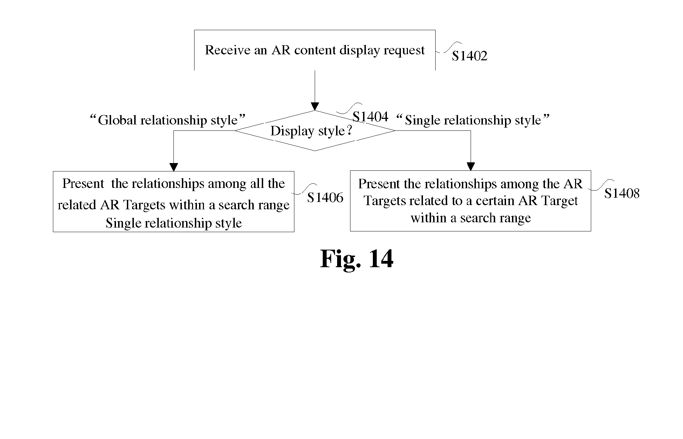

An embodiment of the present invention also discloses a method for a MobAR Server based on a relational point of interest to present AR content, which, as shown in Fig. 14, includes the following specific steps:
S1402: the MobAR Client receives an AR content display request.
S1404: the MobAR Client determines the display style indicated in the display request, executes step S1406 after determining the display style is 'global relationship style', or executes step S1408 after determining the display style is 'single relationship style'.
S1406: for the 'global relationship style', the MobAR Client extracts and presents globally related AR Targets and ends the flow.
S1408: for the 'single relationship style', the MobAR Client extracts and presents AR Targets related to a certain AR Target.

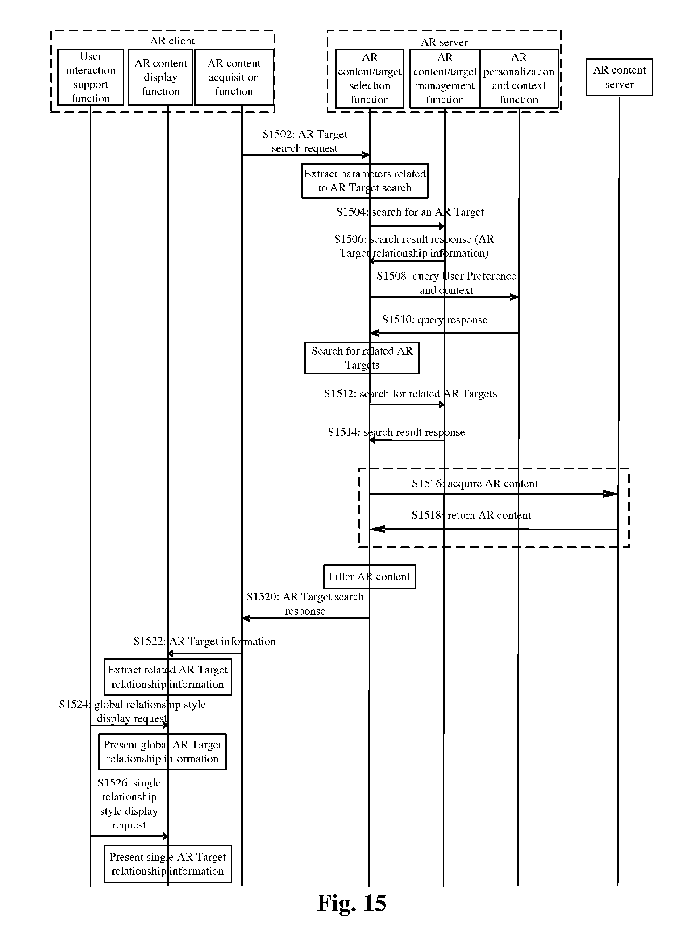

An embodiment of the present invention also provides a specific MobAR method based on a relational point of interest for searching for related AR Targets while requesting for a search for an AR Target, which, as shown in Fig. 15, includes:
S1502: a MobAR Client generates parameters related to AR Target search according to the AR terminal context (longitude and latitude) collected or characteristics (e.g. image characteristic descriptor) of an alternative AR Target and sends an AR Target search request to a MobAR Server. A 'related AR Target search indicator' and a 'related AR Target search relationship' are provided in the AR Target search request.
S1504-S1506: the MobAR Server extracts the parameters related to search carried in the AR Target search request to construct a query condition, searches for information of stored AR Targets based on a relational point of interest, and returns matched AR Target information containing the relationships among related AR Targets.
S1508-S1510: the MobAR Server queries AR personalization and context which includes: the setting of the preference on the search for related AR Targets and the setting of the preference on the filtering of AR content/targets.
S1512-S1514: based on the 'related AR Target search indicator' or the setting of the preference on the search for AR Targets in AR personalization and context, the MobAR Server searches for other unmatched related AR Targets according to the relationship attribute, for example, a relationship 'Contains', 'Contained-within' or 'Adjacent to', in the matched AR Target information searched.
S1516-S1518: the MobAR Server requests an AR content server to acquire AR content corresponding to the matched AR Target obtained by searching.
S1520: the MobAR Server filters the AR content/targets according to the set preference on the filtering of AR content/targets and returns the AR Target search response of the MobAR Client containing related AR Target information.
S1522: the MobAR Client receives the AR Target information returned from the search and extracts AR Target information containing related AR Target information, wherein a relationship attribute is carried in the AR Target information.
S1524: the MobAR Client receives a global relationship style display request of a user and presents global AR Target information containing related AR Targets according to the AR Target relationship extracted.
S1526: the MobAR Client receives a single relationship style display request and presents certain AR Target information containing related AR Targets according to the extracted AR Target relationship.

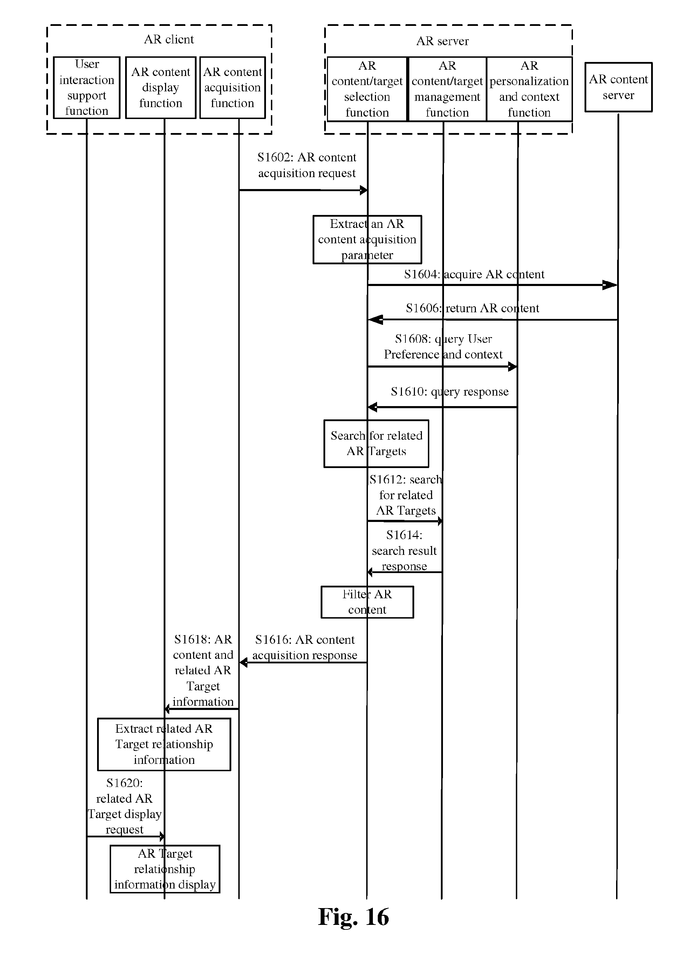

An embodiment of the present invention also provides a specific embodiment of a MobAR method based on a relational point of interest for searching for related AR Targets while acquiring AR content, and as shown in Fig. 16, the method includes:
S1602: a MobAR Client generates an AR content acquisition parameter according to an interaction request of a user and sends the AR content acquisition request to a MobAR Server. A 'related AR Target search indicator' and a 'related AR Target search relationship' are provided in the AR content acquisition request.
S1604-S1606: the MobAR Server extracts the acquisition parameter carried in the AR content acquisition request and requests an AR content server to acquire corresponding AR content.
S1608-S1610: the MobAR Server queries AR personalization and context which includes: the setting of the preference on the search for related AR Targets and the setting of the preference on the filtering of AR content/targets.
S1612-S1614: based on the 'related AR Target search indicator' or the set preference on the search for AR Targets contained in AR personalization and context, the MobAR Server further searches for related AR Targets according to the relationship attribute, for example, a relationship 'Contains', 'Contained-within' or 'Adjacent to', in corresponding AR Target information.
S1616: the MobAR Server filters the AR content/ targets according to the set preference on the filtering of AR content/targets and returns an AR content acquisition response of the MobAR Client containing related AR Target information.
S1618: the MobAR Client receives the AR content returned and extracts related AR Target information involved in the AR Target relationship attribute.
S1620: the MobAR Client receives a related AR Target display request of the user and presents the related AR Target information extracted.

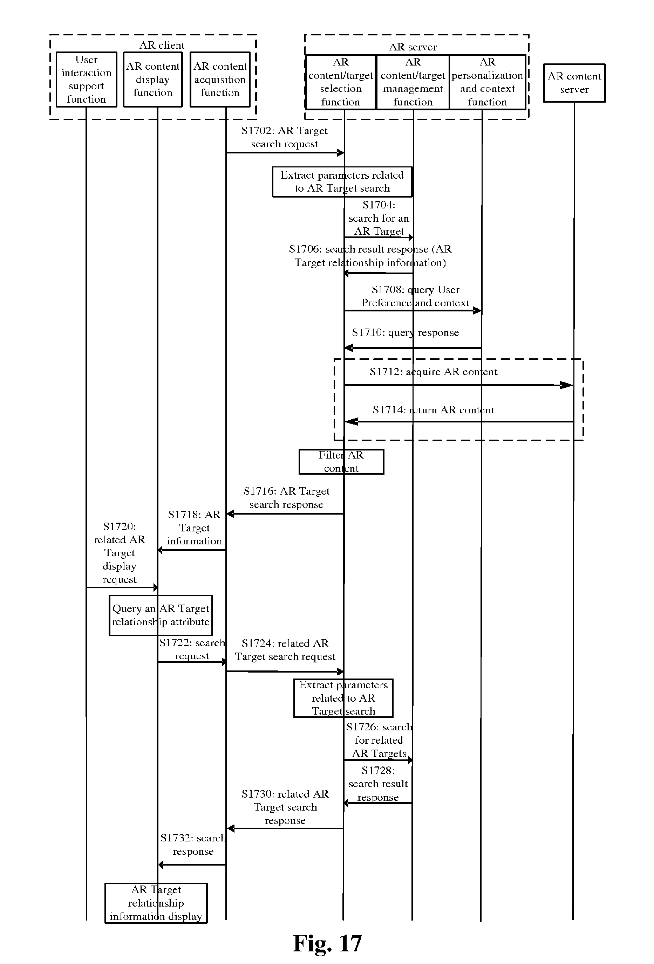

An embodiment of the present invention also provides a specific embodiment of a MobAR method based on a relational point of interest for requesting for a search for related AR Targets, and the method, as shown in Fig. 17, includes:
S1702: a MobAR Client generates parameters related to AR Target search according to the AR terminal context (longitude and latitude) collected or characteristics (e.g. image characteristic descriptor) of an alternative AR Target and sends the AR Target search request to a MobAR Server.
S1704-S1706: the MobAR Server extracts the parameters related to search carried in the AR Target search request to construct a query condition, searches for information of stored AR Targets based on a relational point of interest, and returns matched AR Target information containing the relationships among related AR Targets.
S1708-S1710: the MobAR Server queries AR personalization and context which includes: the setting of the preference on the search for related AR Targets and the setting of the preference on the filtering of AR content/targets.
S1712-S1714: the MobAR Server requests an AR content server to acquire AR content corresponding to the matched AR Target obtained by searching.
S1716 the MobAR Server filters AR content/targets according to the set preference on the filtering of AR content/targets and returns an AR Target search response of the MobAR Client.
S1718: the MobAR Client receives the AR Target information returned from the search in which not information of all related AR Target involved in the AR relationship attribute is included.
S1720: the MobAR Client receives a related AR Target display request of a user, queries an AR Target relationship attribute and determines related AR Targets involved in the display request.
S1722-S1724: the MobAR Client sends a related AR Target search request to the MobAR Server.
S1726-S1728: the MobAR Server extracts the parameters related to search carried in the AR Target search request to construct a query condition, searches for information of stored AR Targets based on a relational point of interest, and returns matched AR Target information.
S1730: the MobAR Server returns a related AR Target search response to the MobAR Client.
S1732: the MobAR Client presents related AR Target information.

The relationships mentioned in the aforementioned embodiments mainly include:
the relationships in geographical location which include: 'Contains', 'Contained-within' and 'Adjacent-to'. The aforementioned relationships in geographical location are described below based on the exemplary relationship between a POI A and a POI B. Specifically,
the relationship 'Contains' represents that a physical POI (e.g. POI A) contains another POI (e.g. POI B);
the relationship 'Contained-within' represents that a physical POI (e.g. POI B) is contained within another POI (e.g. POI A); and
the relationship 'Adjacent-to' represents that a POI (POI A) is adjacent to another POI (POI B) in deployed geographical location.

The relationships between logic memberships include: 'Father', 'Child' and 'Similar with'. The aforementioned relationships between logic memberships are described below based on the exemplary relationship between a POI A and a POI B. Specifically,
the relationship 'Parent' represents that a POI (e.g. POI A) owns or is the father of another POI (e.g. POI B) according to a membership relationship;
the relationship 'Child' represents that a POI (e.g. POI B) is owned by or is the child of another POI (e.g. POI A) according to a membership relationship; and
the relationship 'Similar with' represents that a POI (e.g. POI A) is similar with another POI (e.g. POIB) in certain characteristics (classification, type and price).

The relationships in temporal dimension include: Historical and Future. The aforementioned relationships in temporal dimension are described below based on the exemplary relationship between a POI A and a POI B. Specifically,
the relationship 'Historical' represents a POI (e.g. POI A) is corresponding to another POI (e.g. POI B) at a past historical moment in temporal dimension; and
the relationship 'Future' represents a POI (e.g. POI A) is corresponding to another POI (e.g. POI B) at a further moment in temporal dimension.

It can be seen from the description above that the embodiments of the present invention achieve the following technical effects.

The embodiments of the present invention provide a MobAR method and a MobAR system based on a relational point of interest, by using which not only AR Targets can be searched according to the current position of a user or an image captured by a terminal but also AR POI can be returned for the user in combination with the relationships between the targets deployed in the vicinity. On the one hand, the user can acquire the relationship between the AR points of interest returned from the search to facilitate the following access to points of interest, for example, adjacency access, father-child access, analogue access, and on the other hand, the user is aware of the AR points of interest outside a search range so as not to miss other interested AR information.

In the embodiments of the present invention, a MobAR Server searches for related AR Targets according to an AR Target search request or the indication information carried in an AR content acquisition request indicating a search for related AR Targets, thereby addressing the problem in the related art that the search result of a search merely for an object requested is incomplete and achieving a technical effect that more complete information is searched in an AR application, thus, the user is provided with more complete augmented reality information, and the experience of the user in the AR application is enhanced.

Apparently, it should be appreciated by those skilled in the art that the modules or steps of the present invention can be realized by a universal computer, centralized on a single computer or distributed on a network consisting of multiple computers, and optionally realized by computer-executable program codes; the modules or steps can be therefore stored in a storage device to be executed by a computer in an order different from this illustrated therein or separately manufactured into integrated circuit modules, or some of the modules or steps are manufactured into a single integrated circuit module. Thus, the present invention is not limited to any special combination of hardware and software.

The mentioned above is only preferred embodiments of the present invention but not limitation to the present invention, various modification and variations can be devised by those skilled in this art, and it should be understood that any modification, equivalent and improvement devised without departing from the scope of the present invention fall within the protection scope as defined in the appended claims of the present invention.

## Claims

1. A mobile Augmented Reality (MobAR) search method, **characterized by** comprising:
a MobAR Server receiving an Augmented Reality (AR) target search request sent from a MobAR Client;
the MobAR Server identifying which AR Targets need to be recognized and returned according to parameters related to search carried in the AR Target search request;
the MobAR Server searching for an AR Target which has relationships with the AR Targets already searched back; and
the MobAR Server sending searched AR Target information back to the MobAR Client.

2. The method according to claim 1, **characterized in that** the MobAR Server searching for the AR Target which has relationships with the AR Targets already searched back comprises:
the MobAR Server determining AR Target relationships according to a first indicator carried in the parameters related to search; and
the MobAR Server searching for the AR Target which has the AR Target relationships with the AR Targets already searched back.

3. The method according to claim 2, **characterized in that** the AR Target relationships comprise at least one of the following relationships: Contains, Contained-within and Adjacent-to.

4. The method according to claim 2, **characterized in that** the AR Target relationships comprise at least one of the following relationships: Parent, Child, Historical and Future.

5. The method according to claim 1, **characterized in that** the MobAR Server searching for the AR Target which has relationships with the AR Targets already searched back comprises:
the MobAR Server determining whether or not the parameters related to search contain a second indicator for instructing to search for the AR Target which has relationships with the AR Targets already searched back; and
the MobAR Server searching for the AR Target which has relationships with the AR Targets already searched back according to the second indicator if the parameters related to search contain the second indicator.

6. The method according to claim 1, **characterized in that** after the MobAR Server searches for the AR Target which has relationships with the AR Targets already searched back, the method further comprises:
the MobAR Server determining whether or not the parameters related to search contain a third indicator for instructing to search for AR content corresponding to the AR Target which has relationships with the AR Targets already searched back; and
the MobAR Server searching for the AR content corresponding to the AR Target which has relationships with the AR Targets already searched back according to the third indicator if the parameters related to search contain the third indicator.

7. A mobile Augmented Reality (MobAR) search method, **characterized by** comprising:
a MobAR Server receiving an Augmented Reality (AR) content acquisition request sent from a MobAR Client;
the MobAR Server searching for AR contents which need to be acquired and returned according to parameters carried in the AR content acquisition request;
the MobAR Server searching for an AR Target which has relationships with AR Targets corresponding to the acquired AR contents; and
the MobAR Server returning to the MobAR Client the acquired AR contents and information of the AR Target which has relationships with the AR Targets corresponding to the acquired AR contents.

8. The method according to claim 7, **characterized in that** the MobAR Server searching for the AR Target which has relationships with the AR Targets corresponding to the acquired AR contents comprises:
the MobAR Server determining AR Target relationships according to a first indicator carried in the parameter; and
the MobAR Server searching for an AR Target which has the AR Target relationships with the AR Targets corresponding to the acquired AR contents.

9. The method according to claim 8, **characterized in that** the AR Target relationships comprise at least one of the following relationships: Parent, Child, Historical and Future.

10. The method according to claim 7, **characterized in that** the MobAR Server searching for the AR Target which has relationships with the AR Targets corresponding to the acquired AR contents comprises:
the MobAR Server determining whether or not the parameters contain a second indicator for instructing to search for the AR Target which has relationships with the AR Targets corresponding to the acquired AR contents; and
the MobAR Server searching for the AR Target which has relationships with the AR Targets corresponding to the acquired AR contents according to the second indicator if the parameters related to search contain the second indicator.

11. The method according to claim 7, **characterized in that** after the MobAR Server searches for the AR Target which has relationships with the AR Targets corresponding to the acquired AR contents, the method further comprises:
the MobAR Server determining whether or not the parameters contain a third indicator for instructing to acquire AR content corresponding to the AR Target which has relationships with the AR Targets corresponding to the acquired AR contents; and
the MobAR Server searching for the AR content corresponding to the AR Target which has relationships with the AR Targets corresponding to the acquired AR contents according to the third indicator if the parameters related to search contain the third indicator.

12. A mobile Augmented Reality (MobAR) search method, **characterized by** comprising:
a MobAR Client providing parameters related to search in an Augmented Reality (AR) target search request according to User Context and/or User Preference, wherein the parameters related to search are used to request a MobAR Server to search for AR Targets and an AR Target which has relationships with the AR Targets; and
the MobAR Client sending the AR Target search request to the MobAR Server.

13. The method according to claim 12, **characterized in that** the MobAR Client providing the parameters related to search in the AR Target search request according to the User Context and/or User Preference comprises:
the MobAR Client providing a first indicator in the parameters related to search, wherein the first indicator is used to indicate AR Target relationships and to request the MobAR Server to search for an AR Target which has the AR Target relationships with the AR Targets.

14. The method according to claim 13, **characterized in that** the AR Target relationships comprise at least one of the following relationships: Contains, Contained-within, Adjacent-to, Parent, Child, Historical and Future.

15. The method according to claim 12, **characterized in that** the MobAR Client providing the parameters related to search in the AR Target search request according to the User Context and/or User Preference comprises:
the MobAR Client providing a second indicator in the parameters related to search, wherein the second indicator is used to instruct to search for the AR Target which has relationships with the AR Targets.

16. The method according to claim 12, **characterized in that** the MobAR Client providing the parameters related to search in the AR Target search request according to the User Context and/or User Preference comprises:
the MobAR Client providing a third indicator in the parameters related to search, wherein the third indicator is used to instruct the MobAR Server to search for AR content corresponding to the AR Target which has relationships with the AR Targets which need to be recognized and returned.

17. A mobile Augmented Reality (MobAR) search method, **characterized by** comprising:
a MobAR Client providing parameters in an Augmented Reality (AR) content acquisition request, wherein the parameters are used to request a MobAR Server to acquire AR contents and to search for an AR Target which has relationships with AR Targets corresponding to the acquired AR contents; and
the MobAR Client sending the AR content acquisition request to the MobAR Server.

18. The method according to claim 17, **characterized in that** the MobAR Client providing the parameters in the AR content acquisition request comprises:
the MobAR Client providing a first indicator in the parameter, wherein the first indicator is used to indicate AR Target relationships and to request the MobAR Server to search for the AR Target which has relationships with the AR Targets corresponding to the acquired AR contents.

19. The method according to claim 18, **characterized in that** the AR Target relationships comprise at least one of the following relationships: Contains, Contained-within, Adjacent-to, Parent, Child, Historical and Future.

20. The method according to claim 17, **characterized in that** the MobAR Client providing the parameters in the AR content acquisition request comprises:
the MobAR Client providing a second indicator in the parameter, wherein the second indicator is used to instruct to search for the AR Target which has relationships with the AR Targets corresponding to the acquired AR contents.

21. The method according to claim 17, **characterized in that** the MobAR Client providing the parameters in the AR content acquisition request comprises:
the MobAR Client providing a third indicator in the parameter, wherein the third indicator is used to instruct the MobAR Server to acquire AR content corresponding to the AR Target which has relationships with the AR Targets corresponding to the acquired AR contents.

22. A mobile Augmented Reality (MobAR) search method, **characterized by** comprising:
a MobAR Client receiving an Augmented Reality (AR) target search response returned from a MobAR Server;
the MobAR Client extracting information of AR Targets carried in the AR Target search response; and
the MobAR Client displaying relationships among the AR Targets according to the information of the AR Targets.

23. The method according to claim 22, **characterized in that** the MobAR Client displaying the relationships among the AR Targets comprises:
the MobAR Client displaying the relationships among all AR Targets within a search range; or
the MobAR Client displaying the relationships corresponding to one AR Target.

24. The method according to claim 22 or 23, **characterized in that** the relationships comprise at least one of the following relationships: Contains, Contained-within, Adjacent-to, Parent, Child, Historical and Future.

25. A mobile Augmented Reality (MobAR) server, **characterized by** comprising:
a receiving unit configured to receive an Augmented Reality (AR) target search request sent from a MobAR Client;
a first search unit configured to identify, according to parameters related to search carried in the AR Target search request, which AR Targets need to be recognized and returned;
a second search unit configured to search for an AR Target which has relationships with the AR Targets already searched back; and
a returning unit configured to send searched AR Target information back to the MobAR Client.

26. A mobile Augmented Reality (MobAR) server, **characterized by** comprising:
a receiving unit configured to receive an Augmented Reality (AR) content acquisition request sent from a MobAR Client;
a first search unit configured to search for, according to parameters carried in the AR content acquisition request, AR contents which need to be acquired and returned;
a second search unit configured to search for an AR Target which has relationships with AR Targets corresponding to the acquired AR contents; and
a returning unit configured to return to the MobAR Client the acquired AR contents and information of the AR Target which has relationships with the AR Targets corresponding to the acquired AR contents.

27. A mobile Augmented Reality (MobAR) client, **characterized by** comprising:
a provision unit configured to provide parameters related to search in an Augmented Reality (AR) target search request according to User Context and/or User Preference, wherein the parameters related to search are used to request a MobAR Server to search for AR Targets and an AR Target which has relationships with the AR Targets; and
a sending unit configured to send the AR Target search request to the MobAR Server.

28. A mobile Augmented Reality (MobAR) client, **characterized by** comprising:
a provision unit configured to provide parameters in an Augmented Reality (AR) content acquisition request, wherein the parameters are used to request a MobAR Server to acquire AR contents and to search for an AR Target which has relationships with AR Targets corresponding to the acquired AR contents; and
a sending unit configured to send the AR content acquisition request to the MobAR Server.

29. A mobile Augmented Reality (MobAR) client, **characterized by** comprising:
a receiving unit configured to receive an Augmented Reality (AR) target search response returned by a MobAR Server;
an extraction unit configured to extract information of AR Targets carried in the AR Target search response; and
a display unit configured to display relationships among the AR Targets according to the information of the AR Targets.

30. A mobile Augmented Reality (MobAR) search system, **characterized by** comprising: the MobAR Server claimed in Claim 25 or 26 and the MobAR Client claimed in any one of Claims 27 to 29.
